# EUROPEAN PATENT APPLICATION

(11) **EP 4 800 632 A1**
(43) Date of publication of application: **02.09.2026**
(21) Application number: 24881983.1
(22) Date of filing: 31.07.2024
(51) Int. Cl.: G06Q 50/04, G06Q 50/26

(54) **OPTIMIZATION SYSTEM AND OPTIMIZATION METHOD**

(30) Priority: 27.10.2023 JP 2023184812
(71) Applicant: Hitachi, Ltd., Tokyo 100-8280 (JP)
(72) Inventor: SATO, Hideki, Tokyo 100-8280 (JP); SASAKI, Tomoyo, Tokyo 100-8280 (JP); TOJO, Nobuhiro, Tokyo 100-8280 (JP); KONO, Ippei, Tokyo 100-8280 (JP)
(74) Representative: MERH-IP Matias Erny Reichl Hoffmann Patentanwälte PartG mbB
(86) International application number: PCT/JP2024/027324
(87) International publication number: WO 2025/088865

(57) **Abstract**

A per-product evaluation section, a per-group evaluation section, a target setting section, and an evaluation determination section are included. The per-product evaluation section changes an allocation condition for pieces of information related to production of a product and evaluates per-product environmental load and economic value of an entire life cycle including processes before and after the production of the product. The per-group evaluation section aggregates the evaluated per-product environmental loads and economic values of the entire life cycles on a per-group basis according to groups in which the products are produced and evaluates per-group environmental loads and economic values corresponding to a plurality of indicators for greenhouse gas emissions. The target setting section sets per-group target values and constraint conditions based on the per-group environmental loads and economic values corresponding to the plurality of indicators for the greenhouse gas emissions. The evaluation determination section outputs allocation conditions necessary to satisfy the per-group target values and constraint conditions to a display section.

## Description

### [Technical Field]

The present invention relates to an optimization system and an optimization method. The present invention is preferably applied, for example, to an optimization system that relates to a technology which evaluates environmental load or economic value in the production of products.

### [Background Art]

In recent years, concerns about the environment have been gaining attention in the production of products. Meanwhile, if excessive cost may be caused by too deep concerns about the environment, economic value such as a profit ratio may be decreased. Patent Literature 1 discloses a technology that calculates, in a case where a reduction target value for environmental load is set on a product-wide, process-wide, businesswide, or the like basis, to what degree environmental load for each of processes of products or parts has to be reduced in a given factory in order to achieve the reduction target value.

### [Citation List]

### [Patent Literature]

[Patent Literature 1]
Japanese Patent Laid-Open No. 2009-32132

### [Summary of Invention]

### [Technical Problem]

The technology disclosed in Patent Literature 1, however, targets the environmental loads of factories which produce products and optimizes production plans for processes of products or parts in the factories in order to reduce the per-site environmental loads thereof. The technology disclosed in Patent Literature 1 presupposes that the targets are confined in the factories.

The present invention has been made in consideration of the matters described above. The present invention proposes an optimization system and an optimization method each of which makes it possible to evaluate environmental load and economic value for the entire life cycle of a product including processes before and after the production of the product.

### [Solution to Problem]

To solve the problem, the present invention includes: a storage section; a per-product evaluation section; a per-group evaluation section; a target setting section; and an evaluation determination section. The storage section stores product information, environmental load information, procurement information, production information, and financial information as pieces of information related to production of at least one product. The per-product evaluation section changes an allocation condition for the pieces of information related to the production of the product and evaluates per-product environmental load and economic value of an entire life cycle including processes before and after the production of the product. The pieces of information are stored in the storage section. The per-group evaluation section aggregates the evaluated per-product environmental loads and economic values of the entire life cycles on a per-group basis according to groups in which the products are produced and evaluates per-group environmental loads and economic values corresponding to a plurality of indicators for greenhouse gas emissions. The target setting section sets per-group target values and constraint conditions based on the per-group environmental loads and economic values corresponding to the plurality of indicators for the greenhouse gas emissions. The evaluation determination section outputs allocation conditions necessary to satisfy the per-group target values and constraint conditions to a display section.

In addition, the present invention includes: a storage step; a per-product evaluation step; a per-group evaluation step; a target setting step; and an evaluation determination step. In the storage step, product information, environmental load information, procurement information, production information, and financial information are stored in a storage section as pieces of information related to production of at least one product. In the per-product evaluation step, a per-product evaluation section changes an allocation condition for the pieces of information related to the production of the product and evaluates per-product environmental load and economic value of an entire life cycle including processes before and after the production of the product. The pieces of information are stored in the storage section. In the per-group evaluation step, a per-group evaluation section aggregates the evaluated per-product environmental loads and economic values of the entire life cycles on a per-group basis according to groups in which the products are produced and evaluates per-group environmental loads and economic values corresponding to a plurality of indicators for greenhouse gas emissions. In the target setting step, a target setting section sets per-group target values and constraint conditions based on the per-group environmental loads and economic values corresponding to the plurality of indicators for the greenhouse gas emissions. In the evaluation determination step, an evaluation determination section outputs allocation conditions necessary to satisfy the per-group target values and constraint conditions to a display section.

### [Advantageous Effect of Invention]

According to the present invention, it is possible to evaluate environmental load and economic value for the entire life cycle of a product including processes before and after the production of the product.

### [Brief Description of Drawings]

[Figure 1] Figure 1 is a block diagram illustrating a system configuration example of an optimization system according to the present embodiment.
[Figure 2] Figure 2 is a diagram illustrating an example in which evaluation results of sites, production lines, and products of a given corporation are grouped.
[Figure 3] Figure 3 is a flowchart illustrating an example of a procedure of evaluation processing.
[Figure 4] Figure 4 is a diagram illustrating an example of an LCA simulation screen.

### [Description of Embodiment]

Hereinafter, an embodiment of the present invention will be described in detail based on the drawings.

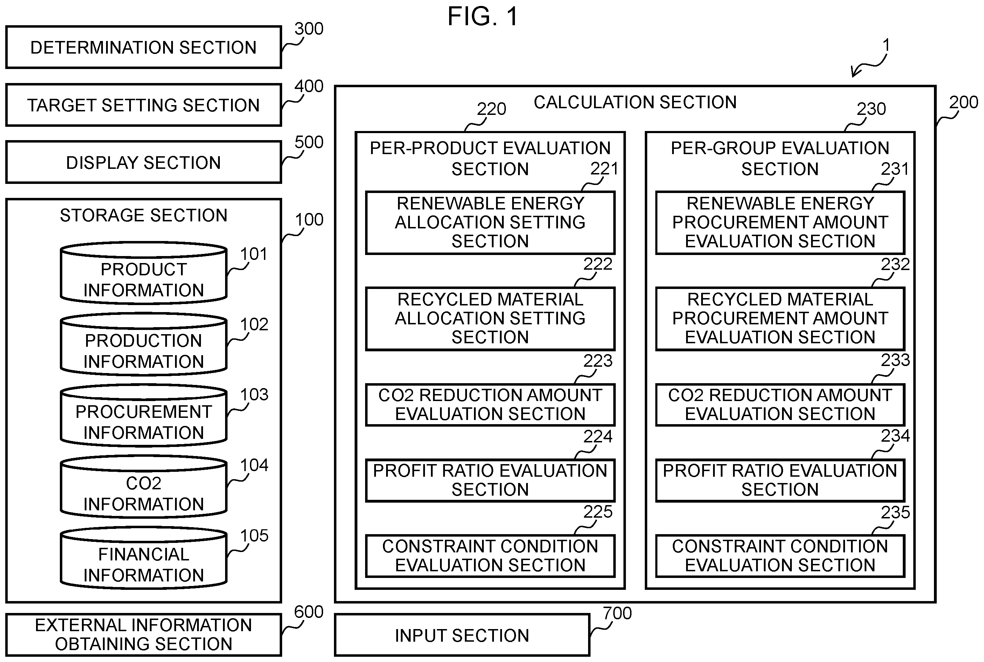

Figure 1 is a block diagram illustrating a system configuration example of an optimization system 1 according to the present embodiment. The optimization system 1 includes a storage section 100, a calculation section 200, a determination section 300, a target setting section 400, a display section 500, an external information obtaining section 600, and an input section 700. The target setting section 400 has a function of setting, for example, target values for environmental load and economic value as KPIs.

The storage section 100 stores product information 101, production information 102, procurement information 103, CO₂ (described as "CO2" below) information 104, and financial information 105 as pieces of information related to the production of at least one product. These product information 101, production information 102, procurement information 103, CO2 information 104, and financial information 105 are pieces of information input from the outside such as a sequencer of the production facility through the external information obtaining section 600 or manually input through the input section 700, for example.

The product information 101 includes at least any of pieces of information such as the product name, the serial number, the product name, the composition, the year of sale, the country of sale, the production quantity, the material weight, and the like of each of a plurality of products as information that allows the products to be distinguished from each other. The production information 102 indicates information for producing a product. The production information 102 includes, for example, information about at least any of the amount of production, a production site, and a production plan.

The procurement information 103 indicates information regarding the procurement of a part necessary to produce a product or the procurement of energy for producing a product. The procurement information 103 includes, for example, information about whether or not at least any of recycled material, biomaterial, secondhand material, and renewable energy is applied.

The CO2 information 104 is an example of information regarding environmental load. The CO2 information 104 includes, for example, electricity generated from renewable energy and the mass balance of renewable energy for Scope 2 and the amount of CO2 reduction by using recycled material for Scope 3 among a plurality of indicators Scopes 1 to 3 for greenhouse gas emissions described below.

The financial information 105 indicates information regarding the finance related to the production of a product. The financial information 105 includes, for example, information about at least any of a selling price, a cost price, a profit ratio, and a carbon tax. Furthermore, the financial information 105 includes, for example, pieces of information regarding the production cost, the electricity cost, and the carbon tax.

The calculation section 200 includes a per-product evaluation section 220 and a per-group evaluation section 230. The per-product evaluation section 220 has functions of changing the amount of allocation serving as an example of an allocation condition for the pieces of information regarding the production of a product stored in the storage section 100 and making evaluations (also described as "evaluations of the environmental load and the economic value" below) of how the per-product environmental load and economic value of the entire life cycle including processes before and after the production of the product change. The amount of allocation is exemplified here as an allocation condition. For example, another condition such as an allocation ratio (allocation rate) may be additionally used.

In the present embodiment, description will be given using a CO2 reduction ratio and a profit ratio as examples of these environmental load and economic value. Note that the environmental load may be another environmental load such as the amount of CO2 reduction in addition to the CO2 reduction ratio described above in the present embodiment. In addition, the economic value may be another economic value such as a profit or an investment in addition to the profit ratio described above in the present embodiment.

The per-group evaluation section 230 has functions of aggregating the per-product CO2 reduction ratios and profit ratios of the entire life cycles evaluated by the per-product evaluation section 220 on a per-group basis according to the groups in which the products are produced and evaluating the per-group CO2 reduction ratios and profit ratios corresponding to the plurality of indicators for greenhouse gas emissions. Note that details of grouping by the per-group evaluation section 230 will be described below.

Here, in the present embodiment, the "entire life cycle" means, in the production of a product, the whole of a cycle from a raw material stage in the factory before a finished product to the finished product being shipped and finally disposed.

In the present embodiment, examples of the plurality of indicators for greenhouse gas emissions described above include Scopes 1 to 3. These Scopes 1 to 3 will be described. Scopes 1 to 3 indicate, for example, indicators of greenhouse gas emissions in a supply chain related to a product. Scope 1 indicates direct greenhouse gas emissions caused by business activities. Scope 2 indicates indirect greenhouse gas emissions at a stage of generating heat and energy used in corporate activities. Scope 3 indicates indirectly caused greenhouse gas emissions other than those of Scope 1 and Scope 2 above.

The per-product evaluation section 220 includes a renewable energy allocation setting section 221, a recycled material allocation setting section 222, a CO2 reduction amount evaluation section 223, a profit ratio evaluation section 224, and a constraint condition evaluation section 225.

In a case where consideration is made on a per-product basis, the renewable energy allocation setting section 221 has a function of setting various types of allocations (e.g., the amount of allocation, the allocation ratio, and the allocation rate) as to to what degree the allocated existing energy currently consumed to produce a product is replaced with renewable energy.

In a case where consideration is made on a per-product basis, the recycled material allocation setting section 222 has a function of setting various allocations (e.g., the amount of allocation, the allocation ratio, and the allocation rate) as to to what degree the existing raw material currently used to produce a product is replaced with recycled material.

In a case where consideration is made on a per-product basis, the CO2 reduction amount evaluation section 223 has a function of evaluating to what degree it is possible to reduce the environmental load (e.g., the CO2 reduction ratio or CO2 emissions) on the per-product basis in a case where each of the allocations described above is changed to produce a product.

In a case where consideration is made on a per-product basis, the profit ratio evaluation section 224 has a function of evaluating to what degree the profit ratio changes on the per-product basis when each of the allocations described above is changed to produce a product.

The constraint condition evaluation section 225 evaluates whether or not the per-product CO2 reduction ratio evaluated by the CO2 reduction amount evaluation section 223 and the per-product profit ratio evaluated by the profit ratio evaluation section 224 satisfy a constraint condition set in advance on a per-product basis. Here, the constraint condition indicates, for example, conditions imposed on fuel, renewable energy, recycled material, mass balance, and the like consumed to produce a product in order to reduce the CO2 reduction ratio.

Meanwhile, the per-group evaluation section 230 includes a renewable energy procurement amount evaluation section 231, a recycled material procurement amount evaluation section 232, a CO2 reduction amount evaluation section 233, a profit ratio evaluation section 234, and a constraint condition evaluation section 235.

For example, in a case where consideration is made with respect to a given corporation (or for each of sites thereof or for each of production lines thereof) (referred to as "on a per-group or equivalent-unit basis" below), the renewable energy procurement amount evaluation section 231 evaluates to what degree it is possible to procure, for example, renewable energy of the corporation such as photovoltaic power generation or renewable energy from an electric power company.

In a case where consideration is made on the per-group or equivalent-unit basis, the recycled material procurement amount evaluation section 232 has a function of evaluating to what degree it is possible to procure recycled material.

In a case where consideration is made on the per-group or equivalent-unit basis, the CO2 reduction amount evaluation section 233 has a function of evaluating to what degree it is possible to reduce CO2 (CO2 reduction ratio).

In a case where consideration is made on the per-group or equivalent-unit basis, the profit ratio evaluation section 234 has a function of evaluating to what degree it is possible to secure the profit ratio.

The constraint condition evaluation section 235 evaluates whether or not the per-group CO2 reduction ratio evaluated by the CO2 reduction amount evaluation section 233 and the per-group profit ratio evaluated by the profit ratio evaluation section 234 satisfy a constraint condition set in advance on a per-group basis. Here, specific examples of the constraint condition include a cost constraint condition for deciding an investment budget in consideration of cost effectiveness, a human constraint condition for deciding the personnel allocation of the corporation to implementation work, the number of people, and the participation degree, and a seasonal constraint condition for arranging an implementation schedule in consideration of the busiest season and deciding the go-live date in consideration of the support expiration date or the like of the existing resource in ERP (Enterprise Resource Planning).

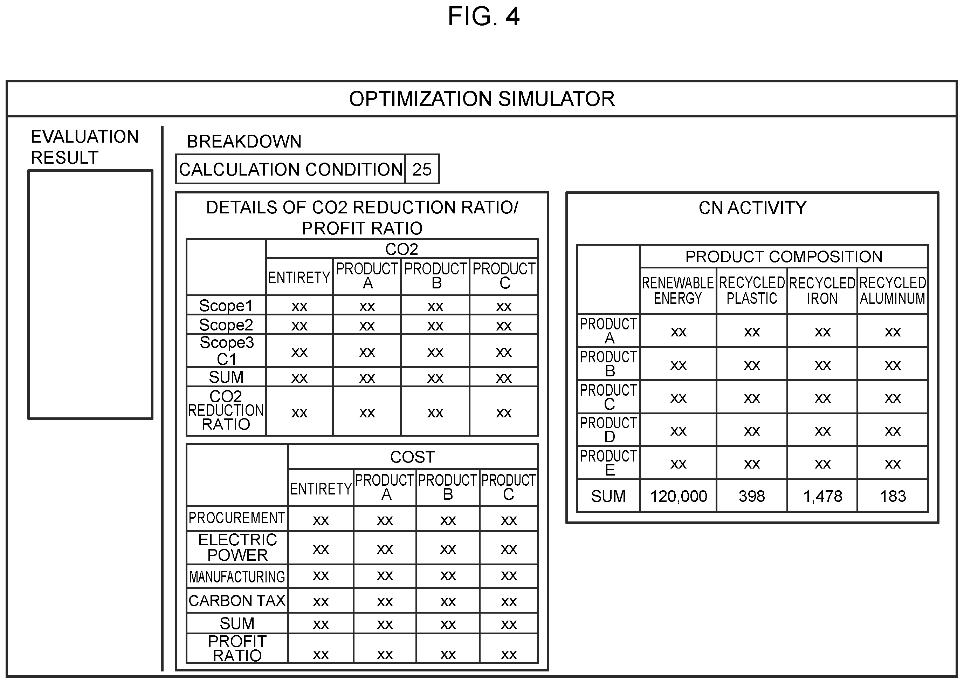

The determination section 300 has functions of evaluating a CO2 reduction ratio and a profit ratio, for example, based on any evaluation condition of a first evaluation condition under which the CO2 reduction ratio is prioritized, a second evaluation condition under which the profit ratio is prioritized, and a third evaluation condition under which the CO2 reduction ratio and the profit ratio are balanced and outputting, for example, an allocation condition for production information necessary to achieve a result of the evaluation, procurement information, and the like to the display section 500 (see the right side of Figure 4 from the center described below).

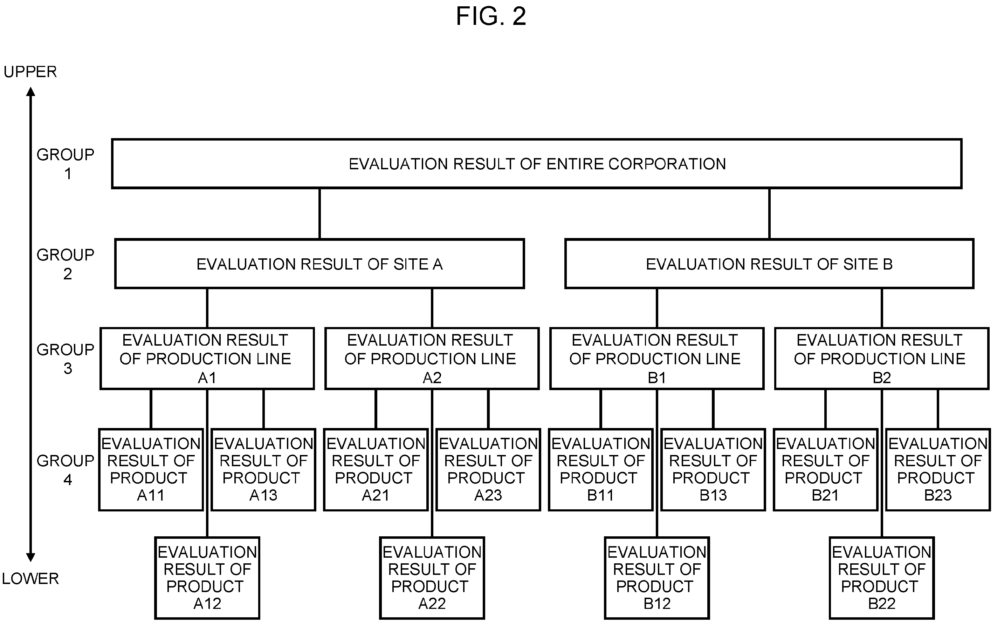

Figure 2 is a diagram illustrating an example in which evaluation results of sites, production lines, and products of a given corporation are grouped. In the present embodiment, the per-group evaluation section 230 has functions of dividing a group into a plurality of levels (groups 1 to 4 as an example in the present embodiment), evaluating the per-product CO2 reduction ratios and profit ratios of the entire life cycles described above for one or more lower groups (e.g., groups 2 to 4) and an upper group (e.g., group 1), and obtaining evaluation results.

More specifically, the respective evaluation results are grouped as follows in the present embodiment. Specifically, first, an evaluation result of the entire corporation belongs to the group 1 that is the uppermost group. Evaluation results of respective sites A and B belong to the group 2 that is an upper group. Evaluation results of respective production lines A1, A2, B1, and B2 belong to the group 3 that is a lower group. Evaluation results of respective products A11 to A13 and A21 to A23 and respective products B11 to B13 and B21 to B23 belong to the group 4 that is the lowermost group. Note that the group 1, the group 2, the group 3, and the group 4 are consecutive from the uppermost group to the lowermost group in the groups 1 to 4 in the illustrated example, but at least one group from the uppermost group to the lowermost group may be omitted and grouping may be set across the at least one group.

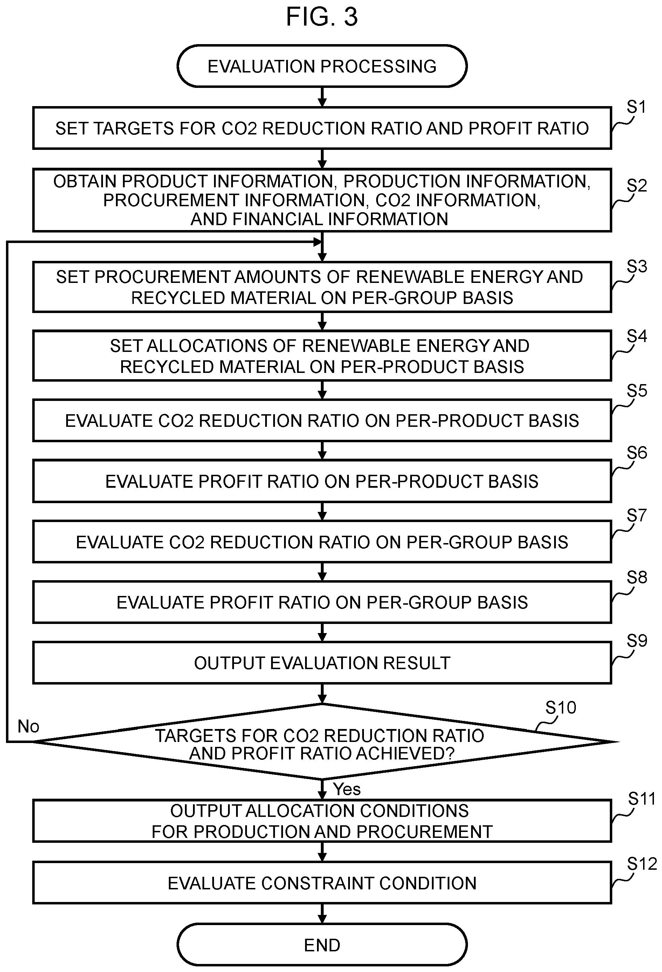

Figure 3 is a flowchart illustrating an example of the procedure of evaluation processing. First, an overview of an LCA (Life Cycle Assessment) optimization method (referred to as a unit "optimization method" below) using the optimization system 1 according to the present embodiment will be described. The optimization method partially including the evaluation processing includes a storage step of storing the product information 101, the CO2 information 104, the procurement information 103, the production information 102, and the financial information 105 in the storage section 100 as pieces of information related to the production of at least one product, a per-product evaluation step of changing, by the per-product evaluation section 220, an allocation condition for the pieces of information related to the production of the product and evaluating, by the per-product evaluation section 220, the per-product CO2 reduction ratio and profit ratio of the entire life cycle including processes before and after the production of the product, a per-group evaluation step of aggregating, by the per-group evaluation section 230, the evaluated per-product CO2 reduction ratios and profit ratios of the entire life cycles on a per-group basis according to the groups in which the products are produced and evaluating, by the per-group evaluation section 230, the per-group CO2 reduction ratios and profit ratios corresponding to Scopes 1 to 3, a target setting step of setting, by the target setting section 400, per-group target values and constraint conditions based on the per-group CO2 reduction ratios and profit ratios corresponding to Scopes 1 to 3, and an evaluation determination step of outputting, by the determination section 300, allocation conditions necessary to satisfy the per-group target values and constraint conditions to the display section 500. Examples of the allocation conditions described above include per-product production and procurement conditions. Furthermore, it is possible exemplify, for example, a condition for any of or a combination of any of the product information 101, the CO2 information 104, the procurement information 103, the production information 102, and the financial information 105 stored in the storage section 100. The following gives specific description.

In step S1, the target setting section 400 sets at least one of target values for a per-product CO2 reduction ratio and profit ratio and target values for a per-group CO2 reduction ratio and profit ratio.

In step S2, the per-product evaluation section 220 and the per-group evaluation section 230 each obtain the product information 101, the production information 102, the procurement information 103, the CO2 information 104, and the financial information 105 stored in the storage section 100.

In step S3, the renewable energy procurement amount evaluation section 231 of the per-group evaluation section 230 sets the procurement amounts of renewable energy and recycled material on a per-group basis.

In step S4, the renewable energy allocation setting section 221 of the per-product evaluation section 220 sets the allocation of renewable energy on a per-product basis and the recycled material allocation setting section 222 of the per-product evaluation section 220 sets the allocation of recycled material on a per-product basis.

In step S5, the CO2 reduction amount evaluation section 223 of the per-product evaluation section 220 evaluates the CO2 reduction ratio on a per-product basis. In step S6, the profit ratio evaluation section 224 of the per-product evaluation section 220 evaluates the profit ratio on a per-product basis.

In step S7, the CO2 reduction amount evaluation section 233 of the per-group evaluation section 230 aggregates the CO2 reduction ratios of the respective products group by group and evaluates the CO2 reduction ratio on a per-group basis. In step S8, the profit ratio evaluation section 224 of the per-group evaluation section 230 aggregates the profit ratios of the respective products group by group and evaluates the profit ratio on a per-group basis.

In step S9, the calculation section 200 causes the display section 500 to output an LCA simulation screen including an evaluation result by the CO2 reduction amount evaluation section 233 of the per-group evaluation section 230 and an evaluation result by the profit ratio evaluation section 224 of the per-group evaluation section 230.

Specifically, an LCA simulation screen including the column of details of a CO2 reduction ratio and a profit ratio, the column of a cost, and the column of a CN activity on the right side from the center is displayed on the display section 500 depending on a specific calculation condition (a calculation condition 25 illustrated in Figure 4 is exemplified) selected from a plurality of calculation conditions. The column of details of a CO2 reduction ratio and a profit ratio shows examples of per-product and per-group CO2 reduction ratios. The column of a cost shows examples of per-product and per-group profit ratios.

The LCA simulation screen displays CO2 reduction ratios and profit ratios, for example, for respective Scopes on a per-product basis. Furthermore, this LCA simulation screen displays CO2 reduction ratios and profit ratios, for example, for respective Scopes on a per-group basis.

Furthermore, the calculation section 200 displays an evaluation result graph to which the per-product and per-group CO2 reduction ratios and profit ratios are plotted on the left side of this LCA simulation screen. Specifically, this evaluation result graph is a graph indicating the evaluation results, for example, with a CO2 reduction ratio [%] on the transverse axis and a profit ratio [%] on the longitudinal axis. The evaluation result graph displays a graph of the optimum plan such that an upward circular arc is drawn from the upper left corner to the lower right corner of the display range thereof. In the evaluation result graph, an KPI indicator corresponding to an KPI for the amount of CO2 reduction defined in advance is vertically displayed (in the direction in which the profit ratio [%] increases from 0) and the KPI indicator crosses the graph of the optimum plan at a predetermined point.

Here, for example, in a case where the KPI for the CO2 reduction ratio is assumed to be 35 [%], it is possible to visually show that the evaluation result graph on the LCA simulation screen can be improved, when the CO2 reduction ratio is currently 12 [%] and the profit ratio is 16 [%], to, for example, a CO2 reduction ratio of 36 [%] and a profit ratio of 18 [%], which is the unillustrated optimum plan under the calculation condition 25.

In this LCA simulation screen, it is possible to change any of the KPI for the CO2 reduction ratio, a design variable, and a constraint condition. It is possible to change the item described above and display an evaluation graph in response to any of the changed KPI for the CO2 reduction ratio, design variable, and constraint condition.

In a case where an evaluation result does not satisfy the KPI for the CO2 reduction ratio, the renewable energy procurement amount evaluation section 231 and the recycled material procurement amount evaluation section 232 make evaluations again in the per-group evaluation section 230. In addition, in a case where an evaluation result does not satisfy the KPI for the CO2 reduction ratio, the renewable energy allocation setting section 221 changes the set allocation of renewable energy again and the recycled material allocation setting section 222 changes the set allocation of recycled material again in the per-product evaluation section 220.

In step S10, the calculation section 200 repeatedly executes the processing (e.g., the processing including steps S3 to S9) described above until the target values for the CO2 reduction ratio and the profit ratio set as KPIs by the target setting section 400 are achieved as described above.

In contrast, in a case where it is determined in step S10 that the target values for the CO2 reduction ratio and the profit ratio set as KPIs by the target setting section 400 are achieved, the per-product evaluation section 220 and the per-group evaluation section 230 execute step S11.

In step S11, the determination section 300 evaluates the CO2 reduction ratio and the profit ratio, for example, based on any evaluation condition of the first evaluation condition under which the CO2 reduction ratio is prioritized, the second evaluation condition under which the profit ratio is prioritized, and the third evaluation condition under which the CO2 reduction ratio and the profit ratio are balanced and outputs, for example, an allocation condition for the production information 102 and the procurement information 193 necessary to achieve a result of the evaluation to the display section 500 among the product information 101, the CO2 information 104, the procurement information 103, the production information 102, and the financial information 105 described above.

Here, the determination section 300 evaluates the CO2 reduction ratio and the profit ratio, for example, based on CO2 emissions and a resource circularity indicator including the utilization ratio of recycled material, the amount of input resources, and the amount of discharged resources as environmental loads.

In step S12, the constraint condition evaluation section 225 of the per-product evaluation section 220 evaluates whether or not the per-product CO2 reduction ratio evaluated by the CO2 reduction amount evaluation section 223 and the per-product profit ratio evaluated by the profit ratio evaluation section 224 satisfy a constraint condition.

Furthermore, in step S12, the constraint condition evaluation section 235 of the per-group evaluation section 230 evaluates whether or not the per-group CO2 reduction ratio evaluated by the CO2 reduction amount evaluation section 233 and the per-group profit ratio evaluated by the profit ratio evaluation section 234 satisfy a constraint condition.

As described above, the optimization system 1 according to the present embodiment includes the storage section 100 that stores the product information 101, the CO2 information 104, the procurement information 103, the production information 102, and the financial information 105, the per-product evaluation section 220 that changes the amount of allocation serving as an example of an allocation condition for pieces of information regarding the production of a product stored in the storage section 100 and evaluates the per-product CO2 reduction ratio and profit ratio of the entire life cycle including processes before and after the production of at least one product, the per-group evaluation section 230 that aggregates the evaluated per-product CO2 reduction ratios and profit ratios of the entire life cycles on a per-group basis according to the groups in which products are produced and evaluates the per-group CO2 reduction ratios and profit ratios corresponding to a plurality of indicators (e.g., Scopes 1 to 3) for greenhouse gas emissions, the target setting section 400 that sets per-group target values and constraint conditions for the per-group CO2 reduction ratios and profit ratios corresponding to Scopes 1 to 3, and the display section 500 that outputs, for example, an allocation condition for the per-product production and procurement necessary to satisfy the per-group target values and constraint conditions.

This makes it possible to evaluate the CO2 reduction ratio and the profit ratio for the entire life cycle of a product including processes before and after the production of the product.

In the present embodiment, the storage section 100 stores, as the procurement information 103, whether or not at least any of recycled material, biomaterial, secondhand material, and renewable energy is applied, stores, as the production information 102, at least any of the amount of production, a production site, and a production plan, and stores, as the financial information 105, at least any of a selling price, a cost price, a profit ratio, and a carbon tax. The display section 500 outputs, for example, the allocation condition for the per-product production and procurement necessary to satisfy the per-group target values and constraint conditions. This makes it possible to more accurately evaluate the CO2 reduction ratio and the profit ratio for the entire life cycle of a product while taking into consideration the output allocation condition for the per-product production and procurement.

In the present embodiment, the per-group evaluation section 230 divides a group into a plurality of levels (e.g., groups 1 to 4) and evaluates the per-group CO2 reduction ratios and profit ratios of the entire life cycles for one or more lower groups (e.g., groups 2 to 4) and an upper group (e.g., group 1). This makes it possible to perform grouping and evaluate the CO2 reduction ratios and the profit ratios of the entire life cycles of products.

The optimization system 1 according to the present embodiment includes the determination section 300 that evaluates the CO2 reduction ratio and the profit ratio based on any evaluation condition of the first evaluation condition under which the CO2 reduction ratio is prioritized, the second evaluation condition under which the profit ratio is prioritized, and the third evaluation condition under which the CO2 reduction ratio and the profit ratio are balanced and outputs, for example, an allocation condition for the production information 102 and the procurement information 103 necessary to achieve a result of the evaluation to the display section 500. This makes it possible to repeatedly make various types of evaluations depending on the output allocation condition.

In the present embodiment, the determination section 300 evaluates the CO2 reduction ratio and the profit ratio based on CO2 emissions and a resource circularity indicator including the utilization ratio of recycled material, the amount of input resources, and the amount of discharged resources. This makes it possible to evaluate the CO2 reduction ratio and the profit ratio based on various types of environmental loads.

The optimization system 1 according to the present embodiment includes the target setting section 400 that sets target values for the CO2 reduction ratio and the profit ratio. This makes it possible to repeatedly evaluate the CO2 reduction ratio and the profit ratio such that the set target values for the CO2 reduction ratio and the profit ratio are approached.

The optimization system 1 according to the present embodiment includes the external information obtaining section 600 (or the input section 700) that receives at least one piece of information of the product information 101, the CO2 information 104, the procurement information 103, the production information 102, and the financial information 105 from the outside. This makes it possible to evaluate the per-product CO2 reduction ratio and profit ratio of the entire life cycle based on the newest product information 101, CO2 information 104, procurement information 103, production information 102, and financial information 105.

In the present embodiment, the display section 500 displays the CO2 reduction ratios and the profit ratios for a plurality of respective indicators (e.g., Scopes) for greenhouse gas emissions on a per-product basis. This makes it possible to determine the validities of the CO2 reduction ratios and the profit ratios displayed on a per-product basis on the per-product basis with reference to these CO2 reduction ratios and profit ratios.

In the present embodiment, the display section 500 displays the CO2 reduction ratios and the profit ratios for a plurality of respective indicators (e.g., Scopes) for greenhouse gas emissions on a per-group basis. This makes it possible to determine the validities of the CO2 reduction ratios and the profit ratios displayed on a per-group basis with reference to these CO2 reduction ratios and profit ratios, for example, on a per-group basis according to any groups of a corporation, sites thereof, production lines, and products.

Note that the present invention is not limited to the example described above. The present invention includes various modification examples and equivalent configurations within the spirit of the appended claims. For example, the example above has been described in detail to make the present invention easier to describe and the present invention is not necessarily limited to an example including all the described components. In addition, at least one of the respective elements described in parallel in the present embodiment may be coupled to another element in series.

### [Industrial Applicability]

The present invention is applicable to an optimization system that relates to a technology which evaluates environmental load and economic value in the production of a product.

### [Reference Signs List]

- 100: storage section
- 200: calculation section
- 220: per-product evaluation section
- 230: per-group evaluation section
- 300: determination section
- 400: target setting section
- 500: display section
- 600: external information obtaining section
- 700: input section

## Claims

1. An optimization system comprising:
a storage section configured to store product information, environmental load information, procurement information, production information, and financial information as pieces of information related to production of at least one product;
a per-product evaluation section configured to change an allocation condition for the pieces of information related to the production of the product stored in the storage section and evaluate per-product environmental load and economic value of an entire life cycle including processes before and after the production of the product;
a per-group evaluation section configured to aggregate the evaluated per-product environmental loads and economic values of the entire life cycles on a per-group basis according to groups in which the products are produced and evaluate per-group environmental loads and economic values corresponding to a plurality of indicators for greenhouse gas emissions;
a target setting section configured to set per-group target values and constraint conditions based on the per-group environmental loads and economic values corresponding to the plurality of indicators for the greenhouse gas emissions; and
an evaluation determination section configured to output allocation conditions necessary to satisfy the per-group target values and constraint conditions to a display section.

2. The optimization system according to claim 1,
wherein
the storage section
stores, as the procurement information, whether or not at least any of recycled material, biomaterial, secondhand material, and renewable energy is applied,
stores, as the production information, at least any of an amount of production, a production site, and a production plan, and
stores, as the financial information, at least any of a selling price, a cost price, a profit ratio, and a carbon tax, and
the display section outputs the allocation conditions necessary to satisfy the per-group target values and constraint conditions.

3. The optimization system according to claim 1,
wherein the per-group evaluation section divides a group into a plurality of levels and evaluates the per-group environmental loads and economic values of the entire life cycles for one or more lower groups and an upper group.

4. The optimization system according to claim 1,
wherein the evaluation determination section evaluates the environmental load and the economic value based on any evaluation condition of a first evaluation condition under which the environmental load is prioritized, a second evaluation condition under which the economic value is prioritized, and a third evaluation condition under which the environmental load and the economic value are balanced and outputs an allocation condition necessary to achieve a result of the evaluation to the display section.

5. The optimization system according to claim 4,
wherein the evaluation determination section evaluates the environmental load and the economic value based on CO2 emissions and a resource circularity indicator including a utilization ratio of recycled material, an amount of input resources, and an amount of discharged resources.

6. The optimization system according to claim 1, comprising a target setting section configured to set target values for the environmental load and the economic value.

7. The optimization system according to claim 1, comprising an information obtaining section configured to receive at least one piece of information of the product information, the environmental load information, the procurement information, the production information, and the financial information from outside.

8. The optimization system according to claim 1,
wherein the display section displays the environmental loads and the economic values for the plurality of respective indicators for the greenhouse gas emissions on a per-product basis.

9. The optimization system according to claim 1,
wherein the display section displays the environmental loads and the economic values for the plurality of respective indicators for the greenhouse gas emissions on a per-group basis.

10. An optimization method comprising:
a storage step of storing product information, environmental load information, procurement information, production information, and financial information in a storage section as pieces of information related to production of at least one product;
a per-product evaluation step of changing, by a per-product evaluation section, an allocation condition for the pieces of information related to the production of the product stored in the storage section and evaluating, by the per-product evaluation section, per-product environmental load and economic value of an entire life cycle including processes before and after the production of the product;
a per-group evaluation step of aggregating, by a per-group evaluation section, the evaluated per-product environmental loads and economic values of the entire life cycles on a per-group basis according to groups in which the products are produced and evaluating, by the per-group evaluation section, per-group environmental loads and economic values corresponding to a plurality of indicators for greenhouse gas emissions;
a target setting step of setting, by a target setting section, per-group target values and constraint conditions based on the per-group environmental loads and economic values corresponding to the plurality of indicators for the greenhouse gas emissions; and
an evaluation determination step of outputting, by an evaluation determination section, allocation conditions necessary to satisfy the per-group target values and constraint conditions to a display section.
